# EUROPEAN PATENT SPECIFICATION

(11) **EP 0 592 812 B1**
(45) Date of publication and mention of the grant of the patent: **05.06.1996**
(21) Application number: 93114478.6
(22) Date of filing: 09.09.1993
(51) Int. Cl.: F04B 39/00, F04B 39/14, F16C 7/02

(54) **Connecting rod for motor-compressor units**
Pleuelstange für Motorverdichtereinheiten
Bielle pour unités moto-compresseur

(30) Priority: 16.10.1992 IT MI920904 U
(43) Date of publication of application: 20.04.1994
(73) Proprietor: WHIRLPOOL EUROPE B.V., NL-5507 SK Veldhoven (NL)
(72) Inventor: Bianchi, Vittorio, c/o Whirlpool Italia s.r.l., I-21025 Comeria (VA) (IT); Maironi, Giuseppe, c/o Whirlpool Italia s.r.l., I-21025 Comeria (VA) (IT)
(74) Representative: Saconney, Piero

(56) References cited:
- EP-A- 0 137 651
- WO-A-92/18781
- GB-A- 2 172 690
- GB-A- 2 211 272
- US-A- 3 465 952

## Description

This invention relates to a motor-compressor unit according to the preamble of claim 1.

A motor-compressor unit of this type, which is known from document GB-A-2 211 272, is quick to assemble, at least in relation to the drive shaft/connecting rod/piston unit.

In this known design the first connecting rod element, which is provided with a forked end, and the second connecting rod element, which is provided with an end adapted to cooperate with the forked end of the first element, are connected together by using a third elastic element in the form of a U-shaped clamp to ensure that these elements remain connected together when under the influence of the forces generated during the reciprocating movement of the piston and of the connecting rod element connected to it (inertial force and negative pressure during the suction stage). Although this solution achieves its purpose of quick connection between the parts, it has various drawbacks.

In this respect the forked end has to fit onto the second element with a certain accuracy. These elements have therefore to be accurately machined to form the seat for the elastic element and hence achieve a reliable connection between the three parts for the entire life of the motor-compressor unit. This is not easy to achieve at low cost, and the motor-compressor unit can become unusable precisely because of incorrect positioning of said elastic element or errors in assembling the two connecting rod elements.

The known design is consequently costly and can lead to unreliability in use, especially after a number of years of operation of the motor-compressor unit.

An object of the present invention is to provide a motor-compressor unit in which the elements to be connected together are connected reliably and without slack, within the material safety limits and manufacturing tolerances of the elements.

A further object is to provide a motor-compressor unit in which these elements are connected together reliably so as to ensure safe coupling between them even after many years of use of the motor-compressor unit and hence guarantee a long operating life for the entire motor-compressor unit.

According to the invention these objects are attained by a motor-compressor unit as claimed.

Thanks to the invention it is possible to obtain a motor-compressor unit in which the two elements of the connecting rod are connected together reliably without the use of an elastic element which is likely to be incorrectly positioned and may be the cause of errors in assembling the two connecting rod elements.

The present invention will be more apparent from the accompanying drawing, which is provided by way of non-limiting example and in which:

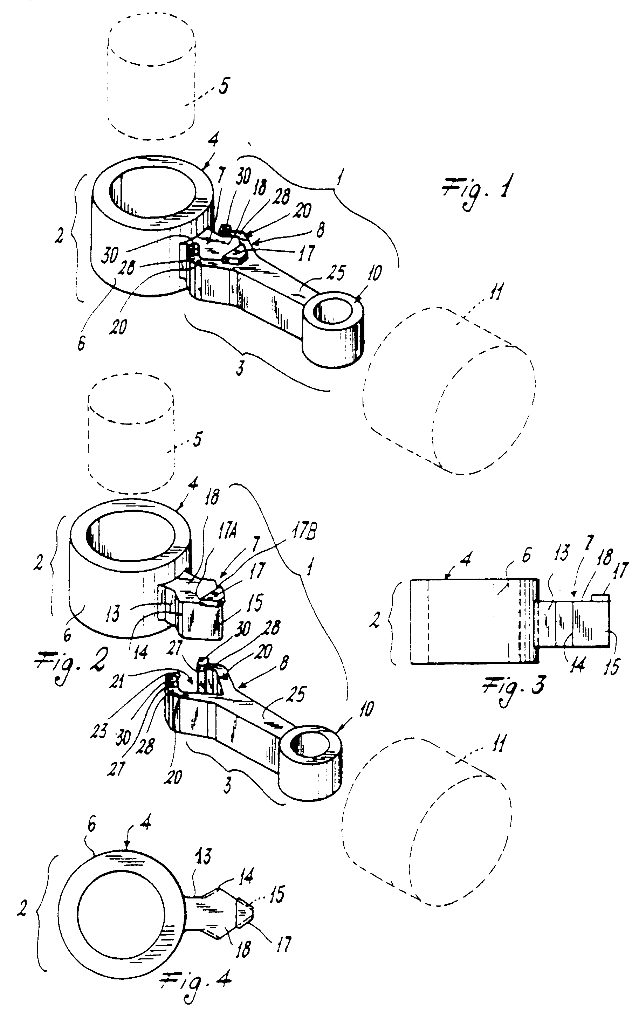

Figure 1 is a perspective view from above showing a motor-compressor unit connecting rod according to the invention;
Figure 2 is an exploded perspective view of the connecting rod of Figure 1;
Figure 3 is a side view of part of the connecting rod of Figure 1;
and
Figure 4 is a plan view of the part shown in Figure 3.

With reference to said figures, a connecting rod of a motor-compressor unit is indicated overall by 1 and comprises a first and a second element 2 and 3 which cooperate with each other. The first element 2 comprises an annular portion 4 to be mounted on the usual motor-compressor unit drive shaft 5 driven by a known electric motor, not shown. From the outer surface 6 of the portion 4 there projects a portion 7 to cooperate with one end 8 of the second element 3. This latter has an annular end 10 to cooperate with the usual motor-compressor unit piston, which is connected to said end 10 in known manner.

More specifically, the portion 7 comprises a substantially straight first part 13 joined to said surface 6, and a widened second part 14 with transverse dimensions greater than 13 and with a tapered end 15. On this latter there is an element 17 connected to a flat surface 18 of the element 2 and projecting laterally therefrom and from the end 15.

The end 8 of the second element 3 is fork-shaped and comprises two arms 20 defining a compartment 21 of shape corresponding to the portion 7 of the first element. Said arms 20 are therefore close together at the open end 23 of the compartment 21, then diverge substantially to the centre of the compartment and come together again at that part 25 of the element 3 which connects the end 8 to the annular end 10.

Shoulders 30 rise from the flat surface 28 of the ends 27 of said arms 20, to cooperate with the ends 17A and 17B of the element 17 of said portion 7.

The elements 2 and 3 of the connecting rod 1 are connected together by slidingly inserting the end 7 of the first element 2 into the end 8 of the second. The shoulders 30 are then made to counteract the ends 17A and 17B of the element 17, while at the same time these latter rest on the part 25 to block movement between said elements.

The counteraction of the shoulders 30 on the ends 17A, 17B of the element 17 prevents accidental separation of the second element 3 from the first element 2.

The connection between the elements 2 and 3 is made and then maintained without the use of any elastic connection material, so simplifying the construction of the connecting rod.

The elements 2 and 3 can be disconnected in the opposite manner to that described for their connection, ie by elastically widening the arms 20 of the end 8 of the second element after moving the shoulders 30 away from the element 17 (by lowering them in the figures).

A particular embodiment of the invention has been described. Other embodiments are however possible, falling within the scope of the present document.

## Claims

1. A motor-compressor unit comprising a drive shaft (5) rotating about its axis and driven by an electric motor, to said shaft (5) there being connected a connecting rod which is connected to a piston mobile within a cylinder, the connecting rod comprising two elements (2, 3) removably connected together, wherein the first element (2) is arranged to cooperate with said first shaft (5) and comprises a part (7) projecting radially outwards from an annular portion (4), said projecting part (7) comprising a first substantially straight portion (13) and a second widened portion (14), and said projecting part (7) tapering at its free end (15), and wherein the second element (3) is arranged to cooperate with the piston (11) and has a substantially fork-shaped end (8) with its arms (20) defining a compartment (21) of shape corresponding to the projecting part (7) of the first element (2), the connection between said first and second element (2, 3) being made by inserting said projecting part (7) of the first element (2) into the compartment (21) defined by the forked end (8) of the second element (3), characterised in that a stop and counteracting member (17) is connected to the tapered end (15) of said first element (2), and in that the arms (20) of the fork-shaped end (8) of the second element (3) carry shoulders (30) which rise from a flat surface (28) of said arms and are arranged to cooperate with ends (17A, 17B) of the stop member (17) which project from the projecting portion (7) of the first element (2).

2. A motor-compressor unit as claimed in claim 1, characterised in that the stop member (17) projects laterally from the tapered end (15).

3. A motor-compressor unit as claimed in claim 1 or 2, characterised in that the arms (20) of the fork-shaped end (8) of the second element (3) are adapted to be elastically widened.

## Patentansprüche

1. Motorverdichter-Einheit, die eine Antriebswelle (5) enthält, die sich um ihre Achse dreht und von einem Elektromotor angetrieben wird, wobei mit dieser Welle (5) eine Pleuelstange verbunden ist, die mit einem Kolben in Verbindung steht, der in einem Zylinder bewegbar ist, wobei die Pleuelstange zwei Elemente (2, 3) besitzt, die trennbar miteinander verbunden sind, wobei das erste Element (2) so aufgebaut ist, daß es mit der ersten Welle (5) zusammenwirkt und einen Teil (7) besitzt, der von einem ringförmigen Teil (4) radial nach außen vorspringt, wobei der vorspringende Teil (7) einen ersten, im wesentlichen geraden Teil (13) sowie einen zweiten, verbreiterten Teil (14) besitzt, wobei sich der vorspringende Teil (7) an seinem freien Ende (15) verjüngt, und wobei das zweite Element (3) so aufgebaut ist, daß es mit dem Kolben (11) zusammenwirkt und ein im wesentlichen gabelförmiges Ende (8) mit Armen (20) besitzt, die eine Zelle (21) bilden, deren Form dem vorspringenden Teil (7) des ersten Elements (2) entspricht, wobei die Verbindung zwischen dem ersten und zweiten Element (2, 3) dadurch erfolgt, daß der vorspringende Teil (7) des ersten Elements (2) in die Zelle (21) eingesetzt wird, die das gabelförmige Ende (8) des zweiten Elements (3) bildet, dadurch gekennzeichnet, daß ein Anschlag- und Gegenwirk-Element (17) mit dem verjüngten Ende (15) des ersten Elements (2) verbunden ist, und daß die Arme (20) des gabelförmigen Endes (8) des zweiten Elements (3) Schultern (30) tragen, die von einer ebenen Fläche (28) der Arme ansteigen und so ausgebildet sind, um mit Enden (17A, 17B) des Anschlag-Elements (17) zusammenzuwirken, das vom vorspringenden Teil (7) des ersten Elements (2) vorspringt.

2. Motorverdichter-Einheit gemäß Anspruch 1, dadurch gekennzeichnet, daß das Anschlag-Element (17) vom verjüngten Ende (15) seitlich vorspringt.

3. Motorverdichter-Einheit gemäß Anspruch 1 oder 2, dadurch gekennzeichnet, daß die Arme (20) des gabelförmigen Endes (8) des zweiten Elements (3) so aufgebaut sind, daß sie elastisch aufgeweitet werden können.

## Revendications

1. Bloc moto-compresseur comprenant un arbre de commande (5) tournant autour de son axe et entraîné par un moteur électrique, une bielle qui est reliée à un piston mobile à l'intérieur d'un cylindre étant accouplée audit arbre (5), cette bielle comprenant deux élément (2, 3) accouplés mutuellement de façon séparable, le premier élément (2) étant disposé de manière à coopérer avec ledit premier arbre (5) et comprenant une partie (7) faisant saillie radialement vers l'extérieur, d'une partie annulaire (4), ladite partie saillante (7) comprenant une première partie (13) sensiblement rectiligne et une seconde partie élargie (14), et ladite partie saillante (7) s'effilant à son extrémité libre (15), et dans lequel le second élément (3) est disposé de manière à coopérer avec le piston (11) et comporte une extrémité (8) sensiblement fourchue dont les bras (20) définissent un évidement (21) de forme correspondant à la partie saillante (7) du premier élément (2), l'accouplement entre lesdits premier et second élément (2, 3) étant effectué par insertion de ladite partie saillante (7) du premier élément (2) dans le compartiment (21) défini par l'extrémité fourchue (8) du second élément (3), caractérisé en ce qu'un élément antagoniste et d'arrêt (17) est fixé à l'extrémité effilée (15) dudit premier élément (2), et en ce que les bras (20) de l'extrémité fourchue (8) du second élément (3) portent des épaulements (30) qui s'élèvent depuis une surface plate (28) desdits bras et sont disposés de manière à coopérer avec les extrémités (17A, 17B) de l'élément d'arrêt (17) qui fait saillie de la partie saillante (7) du premier élément (2).

2. Bloc moto-compresseur selon la revendication 1, caractérisé en ce que l'élément d'arrêt (17) fait saillie latéralement de l'extrémité effilée (15).

3. Bloc moto-compresseur selon la revendication 1 ou 2, caractérisé en ce que les bras (20) de l'extrémité fourchue (8) du second élément (3) sont adaptés pour être écartés élastiquement.
